# EUROPEAN PATENT SPECIFICATION

(11) **EP 0 586 250 B1**
(45) Date of publication and mention of the grant of the patent: **10.07.1996**
(21) Application number: 93306947.8
(22) Date of filing: 02.09.1993
(51) Int. Cl.: A21D 2/36, A21D 10/04

(54) **Sweet baked goods containing potato fiber**
Kartoffelfasern enthaltende Konditorwaren
Produits de pâtisserie contenant des fibres de pomme de terre

(30) Priority: 03.09.1992 US 939796
(43) Date of publication of application: 09.03.1994
(73) Proprietor: McNEIL-PPC, INC., Milltown New Jersey 08850 (US)
(72) Inventor: Barndt, Richard Lee, Highland Park, New Jersey 08904 (US); Bakal, Abraham I., Parsippany, New Jersey 07054 (US)
(74) Representative: Fisher, Adrian John

(56) References cited:
- EP-A- 0 155 889
- WO-A-88/01138
- GB-A- 2 239 584
- FOOD TECHNOLOGY vol. 46, no. 1 , January 1992 , CHICAGO US pages 82 - 86 L.M. BULLOCK ET AL. 'Replacement of simple sugars in cookie dough.'

## Description

The invention relates to sweetened baked goods that contain potato fiber.

### Background of the Invention

The preparation of cakes and similar baked goods that have a significantly reduced calorie content and which retain the quality of conventional cakes has been an elusive goal. Sugars such as sucrose, corn sweeteners, honey, etc., play several roles in baked goods, so when they are replaced with low calorie substitutes-, more than just sweetness must be provided for by their replacement products. For instance, in addition to sweetness, sugar provides bulk, it reduces the water activity in baked goods by immobilizing water, it acts as a humectant to thereby affect the moisture of the finished product, and it affects the gelatinization temperature of starches during baking to thereby play a significant role in the structure, volume, and tenderness of the finished product.

The present invention is based upon the discovery that potato fiber can successfully perform many of the functions of sugar in baked goods.

### Brief Summary of the Invention

The invention provides high quality sweetened baked goods that contain potato fiber and not more than about 20% sugar, on a dry weight basis, wherein said baked goods are produced by baking a mix which comprises the following ingredients:
(a) flour;
(b) sweetener (which may be sugar in a reduced proportion, a heat stable high intensity sweetener such as sucralose, or a combination of sugar and a high intensity sweetener);
(c) potato fiber; and
(d) an emulsifier, shortening, or both.

### The Prior Art

Baked goods and similar products containing reduced sugar content are disclosed in the following:
Setser, WO 91/00016
Glicksman et al., U.S. Patent No. 3,676,150
Rennhard, U.S. Patent No. 3,876,794
Torres, U.S. Patent Nos. 4,042,714 and 4,219,580
Dartey et al., U.S. Patent No. 4,668,519
The manufacturers of potato fiber recommend its use as a food additive for its water-binding and its fat-binding properties. In a recipe for yellow cake, the manufacturer suggests the use of potato fiber in a full sugar formulation as a means for reducing the margarine (shortening) content by one half.

### Detailed Description of the Invention

The ingredients that are employed in the sweetened baked goods products of the invention comprise the following:
(a) flour;
(b) sweetener (which may be sugar in a reduced proportion, a high intensity sweetener such as sucralose, or a combination of sugar and a high intensity sweetener);
(c) potato fiber; and
(d) an emulsifier, shortening, or both.

The combination of all these components in a baked goods mix enables the production of a baked product that approaches the perceived quality of a full sugar baked goods product. Each of the ingredients is discussed in turn below.

### (a) Flour

Conventional cake flour is the preferred flour for use in the invention. Cake flour is flour derived from soft wheat; it normally has a protein content of from about 7.5% to about 8.5%, by weight. (Unless otherwise indicated, all percentages used herein are on a weight percent solids basis of the whole formulation). The nature and preparation of cake flour is known in the art. Flour is used in the mix in an amount sufficient to impart the desired grain and texture to the baked product. The proportion of flour employed is analogous to that which is known in the art, and depends on what type of baked good is being made. The proportion will usually be within the range of from about 15% to about 60%, and preferably, from about 20% to about 50%, of the total weight of dry baked goods mix.

### (b) Sweetener

The sweetener employed will preferably be a high intensity sweetener (low calorie sugar substitute) such as sucralose or other high intensity sweetener that is sufficiently heat stable to withstand baking temperatures, and may also include sugar such as sucrose, fructose, corn sweetener, honey, sugar alcohols, and the like, in a reduced amount (that is, in a proportion less than that normally employed in full calorie baked goods of the same type), or a combination of a reduced amount of sugar and a heat stable high intensity sweetener. The proportion of sugar, when it is present in the baked goods formulation, will be not more than about 20% of the weight of the total mix (on a dry weight basis), and is preferably not more than about 15% of the total weight of the dry mix. (In a full sugar baked goods formulation, the proportion of sugar is normally in excess of 25% by weight of the dry ingredients.)

### (c) Potato Fiber

Potato fiber is a product made from potatoes that can be made by the process of Ralvert, U.S. Patent No. 4,867,998. Briefly, the process used to recover potato fiber from potatoes is the following:
The potatoes are shredded, as by using a rasping procedure, and the starch and fibers are separated; and
The fiber is mechanically dewatered from the potato juice and washing water, and it is then dried to a water content of below 10%.

A potato fiber that is commercially available is Potex™, which is manufactured by Sveriges Starkelseproducenter, Karlshamn, Sweden. Potex is a potato fiber having the following approximate composition (on a dry weight basis):
- Food fiber: - 75%
- Starch: - 10%
- Protein: - 10%
- Ash: - 5% (3% of which is potassium)
Potex also normally contains from about 8-10% moisture.

The potato fiber is employed in the baked goods mix in an amount sufficient to provide the desirable mouthfeel and textural qualities and to control the moisture and water activity that is normally provided by sugar in full calorie baked goods. Normally, the proportion will be found within the range of from about 0.1% to about 2% of total weight of the dry mix, and preferably from about 0.2% to about 1% of the dry mix.

### (d) Emulsifier, Shortening, or Both

Emulsifiers such as lecithin, mono- and di-glycerides, polysorbate 60, and glycerol tristearate, can be used in the invention. The shortening or fat such as butter, margarine, vegetable oils, cocoa butter, vegetable fat, fat mimetics or fat replacers, animal fat, and the like, can be used. The emulsifier and the shortening are used in the baked goods mix of the invention in conventional amounts, which are illustrated in the examples below. As is well known in the art, the specific amount of shortening used in a baked good varies considerably, depending upon the nature of the baked good (e.g., cookies and brownies usually use much more shortening than cakes). Ordinarily, the proportion of shortening will be within the range of from about 5 to 35% of the total dry weight of the mixture.

In one preferred aspect of the invention, the baked goods mix also contains polydextrose in a reduced amount from that normally heretofore employed in low calorie baked goods. Polydextrose is one of the most widely used bulking agents in reduced sugar baking formulations, because it fulfills many of sugar's functions quite well. However, polydextrose has several disadvantages. The most significant disadvantage of polydextrose is that it can have a laxative effect. In fact, United States federal regulations require that when the polydextrose content of a food product is equal to or greater than 15 grams per serving, the possible laxative effect of the product must be disclosed on the label. Another disadvantage of polydextrose is that it is relatively expensive (polydextrose costs about 5 to 7 times more than sugar). However, despite the above-mentioned possible laxative effect and relatively high cost of polydextrose, it is still desirable to employ polydextrose in baking formulations because of its ability to fulfill many of the functions of sugar. It imparts good mouth feel and body, helps to retain moisture, and retards gelatinization of starch during baking. Also, polydextrose has less than half the caloric content of sugar (1 calorie/gm vs. 4 calories/gm).

Polydextrose is a commercially available product. It is a randomly bonded polymer of dextrose containing minor amounts of bound sorbitol and citric acid, and typically is produced by the process disclosed in Rennhard, U.S. Patent No. 3,876,794. The polydextrose is normally employed in the baked goods mix in an amount within the range of from about 1% to about 15% of total weight of the dry mix, and preferably from about 6% to about 10% of the dry mix. Polydextrose will occasionally be referred to herein as "PDX".

Other bulking agents may also be used in reduced amounts, that is, in amounts less than heretofore ordinarily used in reduced sugar formulations. Such other bulking agents include isomalt (a hydrogenated oligosaccharide comprising α-D-glucopyranosyl-1,6-mannitol, and α-D-glucopyranosyl-1,6-sorbitol), Lycasin (a commercial product comprising sorbitol, hydrogenated di-, tri- to hexa-saccharides, and hydrogenated higher saccharides), hydrolyzed gums, sugar alcohols, hydrolyzed hemicellulose and other soluble bulking agents. The total amount of bulking agent used, including PDX, will usually be within the range of from about 1% to about 15%, by weight of the dry mix.

The baked goods of the invention may also contain a leavening system such as carbonate and bicarbonate salts plus an acidifier. Such carbonate and bicarbonate salts are illustrated by sodium bicarbonate, ammonium bicarbonate, potassium bicarbonate, and mixtures thereof. Acidifiers include diammonium hydrogen phosphate, monocalcium phosphate, sodium acid pyrophosphate, sodium aluminum phosphate, and mixtures thereof. The leavening system is employed in an amount sufficient to achieve the desired degree of rising or leavening of the baked good product. Numerical proportions that are used in particular cases are analogous to those that are known in the art. Such proportions are usually found within the range of from about 0.1% to about 5%, by weight, of the total weight of the dry baked good mix.

The baked goods mix also contains liquid such as water, milk (preferably skim milk), eggs, and the like. One feature of the invention is that the combination of potato fiber plus liquid (usually water) is employed as a replacement for sugar. Therefore, the mix of the invention will often contain a little more liquid than full sugar formulations normally contain. The examples below include typical recipes that illustrate this principle.

Other ingredients that are conventionally found in baked goods formulations may also be used in the invention. Such ingredients include various flavoring agents such as almond extract, salt, vanillin, ethyl vanillin, coffee extract, cocoa powder, chocolate liquor, lemon and other citrus flavors, various spices, fruits such as raisins, applesauce, oatmeal, ginger, nuts, chocolate chips, and the like; and other materials such as eggs, egg solids, milk solids, and the like. Such ingredients are used in the ordinary amounts, which are well known in the baked goods arts. The examples below present typical recipes that illustrate the practice of the invention.

The invention also provides a dry mix for use in preparing the baked goods of the invention, wherein said dry mix comprises, on a dry weight basis, an amount of sugar such that when the shortening is added (the dry mix may or may not contain shortening), the full mix (i.e., including shortening) will contain not more than about 20% sugar, said dry mix comprising the following dry ingredients:
(a) flour;
(b) sweetener; and
(c) potato fiber.

The components of the dry mix, to which shortening, emulsifier, or both, are either present in the mix or may be added when used (along with the usual liquid components), are used in the proportions defined above.

In the examples that are presented below, a sensory scale was employed to evaluate the baked goods. The scale used was the following, which is the one routinely used in the baking industry:

### SENSORY SCALE FOR COOKIES

| EXTERNAL | MAXIMUM SCORE |
|---|---|
| Surface appearance | 20 |
| Symmetry | 5 |
| Crust color | 10 |
| Crust character | 5 |
| **TOTAL EXTERNAL SCORE** | **40** |

| INTERNAL | MAXIMUM SCORE |
|---|---|
| Texture | 10 |
| Aroma | 10 |
| Taste | 20 |
| Mouthfeel | 20 |
| **TOTAL INTERNAL SCORE** | **60** |
| TOTAL SCORE | 100 |

### SENSORY SCALE FOR CAKES

| EXTERNAL | MAXIMUM SCORE |
|---|---|
| Volume | 15 |
| Symmetry | 10 |
| Crust color | 5 |
| Crust character | 5 |
| **TOTAL EXTERNAL SCORE** | **35** |

| INTERNAL | MAXIMUM SCORE |
|---|---|
| Grain | 15 |
| Texture | 10 |
| Crumb color | 10 |
| Aroma | 10 |
| Eating quality | 20 |
| **TOTAL INTERNAL SCORE** | **65** |
| TOTAL SCORE | 100 |

In the evaluations reported, four trained judges were used to evaluate each product. Each judge made an independent evaluation and recorded his or her score. The judges then met to discuss their scores and arrived at a consensus score. The consensus scores are given in the examples.

Analysis of the individual scores indicates the Least Significant Difference (LSD) at the 90% confidence level is ± 5.5 for the cookies and ± 3.2 for the cakes, and at the 95% confidence level, the LSD is ± 7.5 for cookies and ± 4.3 for cakes.

### Example 1 - Raisin Cookies

In this example, raisin cookies were produced from the following formulation by the procedure that follows:

### Formulation

| INGREDIENTS | PERCENT | | | |
|---|---|---|---|---|
| | FULL SUGAR CONTROL | NEGATIVE CONTROL | PDX CONTROL | POTEX |
| Milk | 8.80 | 8.75 | 8.70 | 8.75 |
| Raisins | 13.00 | 13.00 | 13.00 | 13.00 |
| Water | --- | 8.00 | --- | 7.60 |
| Brown sugar | 32.00 | 16.00 | 16.00 | 16.00 |
| Polydextrose (Litesse) | --- | 8.00 | 16.00 | 8.00 |
| Potex | --- | --- | --- | 0.40 |
| Shortening (Creamtex) | 11.20 | 11.20 | 11.20 | 11.20 |
| Salt | 0.30 | 0.30 | 0.30 | 0.30 |
| Cinnamon | 0.25 | 0.25 | 0.25 | 0.25 |
| Vanilla | 0.15 | 0.15 | 0.15 | 0.15 |
| Liquid whole eggs | 6.00 | 6.00 | 6.00 | 6.00 |
| Cake flour | 28.05 | 28.05 | 28.05 | 28.05 |
| Sucralose concentrate | --- | 0.05 | 0.10 | 0.05 |
| Baking powder | 0.25 | 0.25 | 0.25 | 0.25 |
| Total | 100.00 | 100.00 | 100.00 | 100.00 |

### Procedure:

1. Combine milk and raisins. Set aside.
2. Cream sugar, [PDX, sucralose (as a 25% liquid concentrate) and Potex when used], shortening, salt, cinnamon, and vanilla for 5 minutes in mixer at high speed.
3. Gradually add whole eggs at medium speed.
4. Incorporate sifted flour and baking powder.
5. Add milk and raisins, and mix thoroughly.
6. Deposit cookies with No. 40 ice cream scoop on lightly greased pans.
7. Bake at 191°C (375°F) until light brown.

The cookies were evaluated as shown below in Table I:

**Table I**

| EVALUATION OF RAISIN COOKIES | | | | |
|---|---|---|---|---|
| | FULL SUGAR CONTROL | NEGATIVE CONTROL | PDX CONTROL | Potex |
| Density (g/cc) | 1.1 | 1.04 | 1.2 | 1.1 |
| pH | 4.6 | 5.2 | 4.6 | 4.8 |
| Spread | 7.2 | 6.8 | 5.9 | 6.0 |
| Height | 1.2 | 1.6 | 1.3 | 1.8 |
| Percent Moisture | 8.8 | 15.4 | 7.6 | 16.1 |
| Sensory Score | 98 | 44 | 61 | 74 |

### Example 2 - Sugar Cookies

Full sugar cookies were prepared in accordance with the formulation given below. Using the same formulation, half the sugar was replaced with polydextrose. As shown in Example 2, the polydextrose product which contains 50% less sugar is less acceptable that the full sugar control. It was unexpectedly found that decreasing the polydextrose by 50% and adding a small amount of Potex, significantly increases the quality of the cookies.

| PERCENT COMPOSITION AND PREPARATION PROCEDURE AND BAKING PROCEDURES FOR SUGAR COOKIES | | | |
|---|---|---|---|
| Ingredients | Full Sugar Control | 50% Sugar | |
| | | PDX Control | Potex |
| Shortening (Creamtex) | 22.5 | 22.5 | 22.5 |
| Granulated sugar | 16.2 | 8.05 | 8.05 |
| Brown sugar | 13.8 | 6.9 | 6.9 |
| Cake & cookie flour (1:1) | 37.5 | 37.5 | 37.5 |
| Polydextrose (Litesse) | --- | 15.0 | 7.5 |
| Whole eggs | 8.8 | 8.8 | 8.8 |
| Vanilla flavor (2X) | 0.4 | 0.4 | 0.4 |
| Baking soda | 0.2 | 0.2 | 0.2 |
| Salt | 0.6 | 0.6 | 0.6 |
| Potex | --- | --- | 0.5 |
| Water | --- | --- | 7.0 |
| Sucralose concentrate | --- | 0.05 | 0.05 |

### Preparation Procedure:

1. Cream sugar, shortening, salt, vanilla flavor, Potex (when used), baking soda (and polydextrose plus 25% aqueous sucralose, where applicable) until smooth.
2. Add eggs and mix until incorporated in blend.
3. Add flour and mix.
3a. Add water in Potex-containing cookies and mix.
4. Drop cookies in greased pan.
5. Bake at 177°C (350°F) for 10-12 minutes.

The results are summarized below:

| | Full Sugar Control | PDX Control | Potex |
|---|---|---|---|
| Dough density (g/cc) | 1.07 | 1.11 | 0.96 |
| Dough pH | 6.4 | 6.8 | 6.5 |
| Spread (cm) | 5.5 | 6.5 | 6.0 |
| Height (cm) | 1.5 | 1.2 | 1.7 |
| Percent moisture | 3.3 | 2.8 | 4.3 |
| Total Sensory Score (max. = 100) | 95 | 69 | 88 |

These data indicate that the replacement of half of the PDX with 0.5% Potex and 7% water significantly improved the quality of the cookies and allowed the production of acceptable cookies having 50% less sugar than the full sugar control.

### Example 3 - Sugar Cookies with no Polydextrose

Sugar cookies were prepared by the preparation procedure described in Example 2. The sugar content of the cookies was reduced from 30% to 15%. Potex and water were added at levels of 0.5% and 14.5% respectively. A negative control cookie containing 15% sugar and 15% water was also prepared. Another cookie was prepared, only the amount of sugar was reduced by one fourth (1/4) to a 75% sugar formulation. Thus, in these latter cookies, 7.5% of the sugar was replaced with 7.0% water and 0.5% Potex. The formulations of these cookies were as follows:

| PERCENT COMPOSITION OF SUGAR COOKIES | | | | |
|---|---|---|---|---|
| Ingredients | Full Sugar Control | Negative Control | Potex | |
| Sugar reduction | | 50% | 50% | 25% |
| Shortening (Creamtex) | 22.5 | 22.5 | 22.5 | 22.5 |
| Granulated sugar | 16.2 | 8.1 | 8.1 | 12 |
| Brown sugar | 13.8 | 6.9 | 6.9 | 10.5 |
| Cake & cookie flour (1:1) | 37.5 | 37.5 | 37.5 | 37.5 |
| Whole eggs | 8.8 | 8.8 | 8.8 | 8.8 |
| Vanilla flavor (2X) | 0.4 | 0.4 | 0.4 | 0.4 |
| Baking soda | 0.2 | 0.2 | 0.2 | 0.2 |
| Salt | 0.6 | 0.6 | 0.6 | 0.6 |
| Potex | --- | --- | 0.5 | 0.5 |
| Water | --- | 14.9 | 14.4 | 6.95 |
| Sucralose concentrate | --- | 0.1 | 0.1 | 0.05 |

The cookies were evaluated and the results are summarized below:

| | Full Sugar Control | Negative Control | Potex | |
|---|---|---|---|---|
| | | | 50% Sugar Reduction | 25% Sugar Reduction |
| Dough density (g/cc) | 1.07 | 1.04 | 1.05 | 0.98 |
| Dough pH | 6.4 | 6.5 | 6.6 | 6.5 |
| Spread (cm) | 5.5 | 5.3 | 5.0 | 5.2 |
| Height (cm) | 1.5 | 1.8 | 1.6 | 1.6 |
| Percent moisture | 3.3 | 11.2 | 9.2 | 4.1 |
| Total Sensory Score (max. = 100) | 98 | 40 | 65 | 89 |

The full sugar controls of Examples 2 and 3 used the same formulations, but were prepared on different days and evaluated at different times.

### Example 4 - Yellow Cake

Full sugar control yellow cake was prepared in accordance with the formulation, preparation and baking procedures described below.

Negative control in which the sugar was reduced to 6.9% and the water was increased from 27.0% to 33.75%. To restore the sweetness, 0.05% of 25% sucralose solution was added.

Experimental (i.e., illustrative of this invention) in which sugar was reduced to 6.9%, Potex was added at 0.5% and the water was increased to 33.25%. To restore the sweetness, 0.05% of a 25% sucralose solution was added.

| Ingredients | Wt. % | | |
|---|---|---|---|
| | Sugar Control | Negative Control | Potex |
| Cake flour | 25.8 | 25.8 | 25.8 |
| Bake-a-Snack | 1.6 | 1.6 | 1.6 |
| Nonfat milk solids | 1.4 | 1.4 | 1.4 |
| Salt | 0.5 | 0.5 | 0.5 |
| Baking powder | 2.8 | 2.8 | 2.8 |
| Centralex D-Lecithin | 0.1 | 0.1 | 0.1 |
| Butter flavor P7087 | 0.1 | 0.1 | 0.1 |
| Sucrose | 13.7 | 6.9 | 6.9 |
| Fructose | 2.7 | 2.7 | 2.7 |
| Shortening (Vream) | 5.4 | 5.4 | 5.5 |
| Emulsifier (EC 25) | 2.2 | 2.2 | 2.2 |
| Egg whites | 12.4 | 12.4 | 12.4 |
| Whole eggs | 4.1 | 4.1 | 4.1 |
| Vanilla (2X) | 0.2 | 0.2 | 0.2 |
| Water | 27.0 | 33.75 | 33.25 |
| Potex | --- | --- | 0.5 |
| Sucralose | --- | 0.05* | 0.05* |

| | | | |
|---|---|---|---|
| * 25% Aqueous solution | | | |

### Procedure:

1. Cream shortening, emulsifier, fructose, (sucralose and Potex where indicated) and sucrose.
2. Add eggs, vanilla, and mix.
3. Dry mix all powder ingredients.
4. Add half powder and half water, and mix in Hobart with whip.
5. Repeat Step 4 while mixing in Hobart with whip.
6. Weigh 150 grams of batter into a 15.2 x 8.3 cm (6 x 3-1/4 inch) pan.
7. Bake at 177°C (350°F) for 25 minutes.

The cakes were compared and the results are as follows:

| | Control | Potex Experimental | Negative Control |
|---|---|---|---|
| Batter density (g/cc) | 0.80 | 0.88 | 0.91 |
| Batter pH | 6.7 | 6.8 | 6.7 |
| Volume (cc) | 390 | 355 | 330 |
| Height (cm) | 4.9 | 4.7 | 4.0 |
| Percent moisture | 36.0 | 41.1 | 45.2 |
| Water Activity (A_{w}) | 0.86 | 0.87 | 0.90 |

| Sensory Data | | | |
|---|---|---|---|
| External attributes (max. = 35) | 33 | 28 | 25 |
| Internal attributes (max. = 65) | 63 | 59 | 45 |
| Total (max. = 100) | 96 | 87 | 70 |

These data indicate that the addition of 0.5% Potex results in a yellow cake which closely resembles the full calorie control in most sensory attributes. In addition, the volume and height of the cakes are very similar.

### Example 5 - Yellow Cake Containing Polydextrose

A full PDX control yellow cake was prepared as described below. A polydextrose reduced cake was prepared in the same manner except that the amount of polydextrose was reduced from 13.7 to 6.9%, the amount of water was increased from 26.95 to 33.35, and Potex was added at 0.4%. This experimental product had 50% less polydextrose than the control.

| Ingredients | Wt.% | |
|---|---|---|
| | PDX Control | Potex |
| Cake Flour | 25.8 | 25.8 |
| Polydextrose, Litesse® (Pfizer) | 13.7 | 6.9 |
| Bake-a-Snack | 1.6 | 1.6 |
| Nonfat milk solids | 1.4 | 1.4 |
| Salt | 0.5 | 0.5 |
| Baking powder | 2.8 | 2.8 |
| Centralex D-Lecithin | 0.1 | 0.1 |
| Butter flavor P7087 | 0.1 | 0.1 |
| Fructose | 2.7 | 2.7 |
| Shortening (Vream) | 5.4 | 5.4 |
| Emulsifier (EC 25) | 2.2 | 2.2 |
| Egg whites | 12.4 | 12.4 |
| Whole eggs | 4.1 | 4.1 |
| Vanilla (2X) | 0.2 | 0.2 |
| Water | 26.95 | 33.35 |
| Sucralose (25% solution) | 0.05 | 0.05 |
| Potex | ---- | 0.4 |

### Procedure:

1. Cream shortening, emulsifier, fructose, sucralose, polydextrose, and Potex, where indicated.
2. Add eggs, vanilla, and mix.
3. Dry mix all powder ingredients.
4. Add half the powder and half the water, and mix in Hobart with whip.
5. Repeat Step 4 while mixing in Hobart with whip.
6. Weigh 150 grams of batter into a 15.2 x 8.3 cm (6 x 3-1/4 inch) pan.
7. Bake at 177°C (350°F) for 25 minutes.

The two cakes were evaluated and the results are summarized below:

| | Control | Potex |
|---|---|---|
| Batter pH | 7.3 | 7.1 |
| Batter density (g/cc) | 0.87 | 0.81 |
| Rise (cm) | 4.0 | 4.5 |
| Cake volume (cc) | 334 | 326 |
| Percent moisture | 40.3 | 42.5 |
| Sensory rating (max. = 100) | 76 | 80 |

These data indicate that the yellow cake with the lower polydextrose content and with 0.4% Potex was at least as good as the PDX control cake.

## Claims

1. A baked comestible containing, on a dry weight basis, not more than about 20% sugar, said baked comestible comprising the baked product of a mix comprising the following ingredients:
(a) flour;
(b) sweetener;
(c) potato fiber; and
(d) shortening, emulsifier, or both shortening and emulsifier.

2. The baked comestible of claim 1, further comprising, on a dry weight basis, from 1 to 15% polydextrose.

3. The baked comestible of claim 1 or claim 2 wherein the sweetener comprises sucralose.

4. The baked comestible of any preceding claim in the form of a cake or a cookie.

5. The baked comestible of any preceding claim wherein the sugar content, on a dry weight basis, is not more than 15%.

6. A dry mix for producing a baked comestible, wherein said mix contains, on a dry weight basis, a reduced proportion of sugar such that the dry mix formulation plus shortening contains not more than about 20% sugar, said dry mix comprising the following dry ingredients:
(a) flour;
(b) sweetener; and
(c) potato fiber.

## Patentansprüche

1. Backwaren, enthaltend, bezogen auf das Trockengewicht, nicht mehr als etwa 20% Zucker, wobei die Backwaren das gebackene Produkt aus einem Gemisch mit folgenden Bestandteilen umfassen:
(a) Mehl;
(b) Süßungsmittel;
(c) Kartoffelfasern; und
(d) Backfett, Emulgator oder sowohl Backfett als auch Emulgator.

2. Backwaren nach Anspruch 1, ferner umfassend, bezogen auf das Trockengewicht, 1 bis 15% Polydextrose.

3. Backwaren nach Anspruch 1 oder 2, wobei das Süßungsmittel Sucralose umfaßt.

4. Backwaren nach einem der vorstehenden Ansprüche, in Form von Kuchen oder Keksen.

5. Backwaren nach einem der vorstehenden Ansprüche, wobei der Zuckergehalt, bezogen auf das Trockengewicht, nicht mehr als 15% beträgt.

6. Trockengemisch zur Herstellung von Backwaren, wobei das Gemisch, bezogen auf das Trockengewicht, einen verringerten Zuckeranteil enthalt, so daß der Ansatz aus dem Trockengemisch und Backfett nicht mehr als etwa 20% Zucker enthält, wobei das Trockengemisch die folgenden trockenen Bestandteile umfaßt:
(a) Mehl;
(b) Süßungsmittel; und
(c) Kartoffelfasern.

## Revendications

1. Produit comestible cuit ne contenant, sur une base pondérale sèche, pas plus de 20% environ de sucre, ledit produit comestible cuit comprenant le produit cuit d'un mélange comprenant les ingrédients suivants :
(a) de la farine,
(b) un édulcorant,
(c) des fibres de pomme de terre, et
(d) un shortening, un émulsifiant, ou les deux.

2. Produit comestible cuit selon la revendication 1, comprenant en plus, sur une base sèche pondérale, de 1 à 15% de polydextrose.

3. Produit comestible cuit selon la revendication 1 ou 2, dans lequel l'édulcorant comprend du sucralose.

4. Produit comestible cuit selon l'une quelconque des revendications précédentes, qui est sous forme d'un gâteau ou d'un gâteau sec.

5. Produit comestible cuit selon l'une quelconque des revendications précédentes, dans lequel la teneur en sucre, sur une base pondérale sèche, ne dépasse pas 15%.

6. Mélange sec pour produire un produit comestible cuit, dans lequel ledit mélange contient, sur une base pondérale sèche, une proportion réduite de sucre de façon que la formulation de mélange sec plus le shortening ne contiennent pas plus de 20% environ de sucre, ledit mélange sec comprenant les ingrédients secs suivants: (a) de la farine, (b) un édulcorant et (c) des fibres de pomme de terre.
